# EUROPÄISCHE PATENTSCHRIFT

(11) **EP 2 368 676 B1**
(45) Veröffentlichungstag und Bekanntmachung des Hinweises auf die Patenterteilung: **31.10.2012**
(21) Anmeldenummer: 11170736.0
(22) Anmeldetag: 30.09.2009
(51) Int. Cl.: B26D 7/00, B32B 17/10, C03B 33/07, B26D 5/02, B26D 1/04

(54) **Vorrichtung und Verfahren zum Entfernen von Folienüberstand an einer Glaskante einer Verbundsicherheitsglastafel**
Method and device for removing film overhang on a glass edge of a compound glass safety screen
Dispositif et procédé de suppression d'un dépassement de feuille sur un rebord en verre d'un tableau de sécurité composite

(30) Priorität: 20.10.2008 DE 102008052319
(43) Veröffentlichungstag der Anmeldung: 28.09.2011
(62) Teilanmeldung aus: 09171882.5
(73) Patentinhaber: HEGLA GmbH & Co. KG, 37688 Beverungen (DE)
(72) Erfinder: Vollbracht, Manfred, 37688 Beverungen (DE); Rotermund, Christian, 37671 Höxter (DE)
(74) Vertreter: Solf, Alexander

(56) Entgegenhaltungen:
- EP-A1- 0 270 452
- EP-A1- 0 845 440
- EP-A1- 0 861 813
- EP-A1- 1 382 441
- FR-A1- 2 443 409

## Beschreibung

Die Erfindung betrifft eine Vorrichtung und ein Verfahren zum Entfernen von Folienüberstand an einer Glaskante einer Verbundsicherheitsglastafel, wie es etwa aus der EP 0 270 452 bekannt ist.

Im Folgenden wird der Einfachheit halber für die Bezeichnung "Verbundsicherheitsglas" die gängige Abkürzung "VSG" verwendet.

VSG-Tafeln im Sinne der Erfindung sind alle Verbundglastafeln, die mindestens eine Verbundfolie aus Kunststoff z. B. aus Polyvinylbutyral (BVB) zwischen zwei Glastafelscheiben aufweisen. Im Wesentlichen sind das Klarglas-Tafeln zur Erzeugung von Klarglasscheiben und Verbundglas-Tafeln zur Erzeugung von Glasabdeckungen (Solarglasscheiben) von Flachkollektoren für Solaranlagen.

Eine VSG-Tafel weist mindestens zwei übereinander angeordnete großformatige Glastafeln auf, zwischen denen eine meist klarsichtige Folie angeordnet ist, die die beiden Glastafeln zusammenhält bzw. miteinander verbindet. Die VSG-Tafeln werden in der Regel auf einen Zuführtisch einer Taktzeit gesteuerten VSG-Schneidanlage verbracht und anschließend auf einem automatisch arbeitenden Schneidtisch der VSG-Schneidanlage in Einzel-VSG-Scheiben durch Ritzen und Brechen aufgeteilt. Wenn das VSG oberflächlich beschichtet ist, wird vor dem Ritzen oder gleichzeitig mit dem Ritzen die Beschichtung in den Aufteilungslinien auf z. B. einem Abschleiftisch randentschichtet (EP 517176 B2).

Die Aufteilungslinien, die in einer VSG-Schneidanlage programmiert gespeichert und mit Steuereinrichtungen auf die Bewegungseinrichtungen der Werkzeuge der Schneidanlage übertragen werden, müssen sehr positionsgenau auf die Oberfläche der VSG-Tafeln aufgebracht werden, damit vorgegebene Abmessungen der aufgeteilten VSG-Scheiben gewährleistet werden können. Zu diesem Zweck sind auf dem Schneidtisch und - sofern vorhanden - auch auf dem vorgeordneten Abschleiftisch für eine Längskante und für die in Arbeitsbewegungsrichtung vordere Stirnkante der VSG-Tafel, die als Führungskanten dienen sollen, auf Abstand und in Reihe angeordnete Anschlagelemente bzw. Führungselemente für Glastafelkanten vorgesehen, an denen diese Kanten der VSG-Tafel während der Bearbeitung anliegen können und positionsgenau auch anliegen sollen und geführt werden.

In der Praxis kann das exakte Anliegen aber nur gewährleistet werden, wenn ein sogenannter Folienüberstand an den Führungskanten der VSG-Tafeln so weitgehend entfernt wird, dass er nicht stört und die Führungskanten einer VSG-Tafel an den Führungselementen der Tische genauer anliegen können.

Folienüberstand an den Kanten weisen die VSG-Tafeln herstellungsbedingt auf. Der Überstand ist in der Regel über 1 mm, z. B. 3 bis 5 mm breit und in der Regel auch noch unregelmäßig breit. Folienüberstände verursachen bei der Weiterverarbeitung auf einer VSG-Schneidanlage Ungenauigkeiten beim Ausrichten z. B. gegen die Anschlagelemente, da das Material der Überstände ungleichmäßig zwischen Anschlagelemente und VSG-Tafelkanten eingeklemmt wird.

Ein unregelmäßiger bzw. ungleichmäßiger und zu breiter Überstand macht demgemäß das exakte Anliegen der Führungskanten einer VSG-Tafel nahezu unmöglich, weshalb der Überstand manuell von einem Bediener mit einem Messer auf eine tolerierbare Breite z. B. auf etwa 1 mm verringert wird, so dass er beim Führen der VSG-Tafel auf den Arbeitstischen an den Anschlagelementen nicht mehr so stark stören kann.

Diese manuelle Arbeit ist jedoch mit einem erheblichen Taktzeitverlust, einer Verletzungsgefahr für den Bediener und mit einer Beschädigungsgefahr für die Glaskanten verbunden. Zudem ist das Schneiden von Hand ungenau bezüglich der Breite des belassenen Überstandes, so dass die gewünschte Anlagegenauigkeit der VSG-Tafelkanten an den Anlage- bzw. Anschlagelementen nicht in ausreichendem Maße gewährleistet werden kann. Außerdem muss darauf geachtet werden, dass die Glaskanten nicht beschädigt werden.

Aufgabe der Erfindung ist, eine in eine Schneidanlage für VSG-Tafeln integrierbare, automatisch arbeitende Vorrichtung und ein Verfahren zum Entfernen störenden Folienüberstandes an VSG-Tafelkanten zu schaffen, die nur mit geringem Taktzeitverlust arbeiten, die Glaskanten der VSG-Tafel nicht beeinträchtigen und vorzugsweise bezüglich der Breite eines tolerierbaren Überstandes einstellbar sind und sehr genau und gleichmäßig arbeiten.

Diese Aufgabe wird erfindungsgemäß durch eine Folienschneidvorrichtung nach Anspruch 1 und ein Verfahren nach Anspruch 21 gelöst. Vorteilhafte Weiterbildungen der Erfindung werden in den jeweiligen Unteransprüchen gekennzeichnet.

Demgemäß betrifft die Erfindung eine Vorrichtung zum Entfernen von Folienüberstand an einer Glaskante einer VSG-Tafel, zweckmäßigerweise ausgebildet als ein in eine VSG-Schneidanlage integriertes oder integrierbares Folienschneidwerkzeug und aufweisend ein vorzugsweise plattenförmiges Montageelement, an dem ein erstes Folienschneidmesser mit arbeitsseitig vorstehender, sich senkrecht zur Flachebene einer zu bearbeitenden Glaskante einer VSG-Tafel erstreckender Schneide angeordnet ist, wobei in einer parallel zur Glaskante verlaufenden Arbeitsrichtung des Folienschneidwerkzeugs hinter der Schneide des Folienschneidmessers nachgeordnet eine erste Abstandhalterolle am Montageelement angeordnet ist, deren Drehachse parallel zur Schneidenerstreckung des ersten Schneidmessers ausgerichtet ist, wobei die zur Stirnkante der VSG-Tafel weisende bzw. der Stirnkante gegenüberliegende (im Folgenden auch glaskantenseitige Mantellinie oder auch nur Mantellinie genannt) Mantellinie der ersten Abstandhalterolle weiter in Richtung Glaskante der VSG-Tafel vorsteht als die Schneide des ersten Folienschneidmessers.

Die erste Abstandhalterolle besteht aus Kunststoff oder weist zumindest eine Kunststoffoberfläche auf. Das erste Folienschneidmesser ist derart versetzbar angeordnet, dass sein Schneidenvorstand bezüglich der glaskantenseitigen Mantellinie der ersten Abstandhalterolle veränderbar ist. In Kombination damit ist zweckmäßigerweise die erste Abstandhalterolle derart versetzbar angeordnet, dass der Vorstand ihrer glaskantenseitigen Mantellinie relativ zum Schneidenvorstand des ersten Schneidmessers veränderbar ist. Vorteilhaft ist, wenn das erste Folienschneidmesser und die erste Abstandhalterolle einheitlich zusammen vor und zurück in Richtung Glaskante verschiebbar am Montageelement angeordnet sind, vorzugsweise verschiebbar mit einer steuerbaren, sich einendig am Montageelement abstützenden Kolbenzylinderanordnung, die anderendig an einer kombinierten Einrichtung aus Folienschneidmessereinrichtung und Abstandhalterolleneinrichtung, von denen mindestens eine Einrichtung am Montageelement verschieblich sitzt, angreift.

Das Montageelement ist vorzugsweise ein Montageplattenelement mit zwei Längskanten, einer vorderen Stirnkante und einer Hinterkante. Auf der einen der Montageplattenoberflächen sind die Folienschneidwerkzeugeinrichtung und die Abstandhalterolleneinrichtung angeordnet.

Auf der Montageplattenoberfläche des Montageplattenelements ist als Folienschneidmessereinrichtung ein Tragelement z. B. in Form einer Tragplatte, parallel zu den Längskanten des Montageplattenelements mit Führungselementen zwischen dem Montageplattenelement und der Tragplatte parallel zueinander verschieblich gehaltert. Am vorderen Ende der Tragplatte ist ein Messerträgerblock befestigt, der die vordere Stirnkante des Montageplattenelements überragt und vorderendig das erste Folienschneidmesser vorzugsweise lösbar befestigt trägt, dessen Schneide parallel zur Stirnkante des Montageplattenelements bzw. senkrecht zu einer zu bearbeitenden Glaskante einer VSG-Tafel verläuft.

Der Messerträgerblock und/oder die Tragplatte stehen mit der Abstandhalterolleneinrichtung in fester Verbindung, zweckmäßigerweise mit einer Rollenträgereinrichtung, die einen Tragarm aufweist, der sich parallel zur Tragplatte erstreckt und mit der Tragplatte zusammen verschiebbar angeordnet ist. Vorderendig trägt der Tragarm z. B. zwischen zwei sich nach vorne erstreckenden Gabelarmen drehbar die erste Abstandhalterolle, deren Drehachse sich parallel zur Messerschneide des Messers erstreckt und in Arbeitsrichtung des Folienschneidwerkzeugs mit relativ kurzem Abstand von z. B. 3 bis 10 cm direkt hinter dem ersten Messer bzw. der ersten Messerschneide angeordnet ist. Die erste Abstandhalterolle ist vor und zurück verstellbar bezüglich der Glaskante und damit auch justierbar z. B. zwischen den Gabelarmen angeordnet.

Die oben angegebenen erfindungsgemäßen Merkmale werden durch die Merkmale ergänzt, dass parallel zu den Längskanten des Montageplattenelements sich erstreckend neben der Tragplatte auf dem Montageplattenelement die Kolbenzylinderanordnung angeordnet ist, deren rückwärtiges Ende z. B. an einem auf dem Montageelement festsitzenden Lagerbock befestigt ist, wobei am vorderen Ende der Kolbenzylinderanordnung der Messerträgerblock und/oder die Tragplatte befestigt ist.

Vorteilhaft wie die oben angegebenen erfindungsgemäßen Merkmale ist auch, dass die Vorrichtung in eine VSG-Schneidanlage integriert werden kann, die einen Zuführtisch und zumindest einen Arbeitstisch in Transportrichtung der VSG-Tafel nachgeordnet aufweist, wobei vorzugsweise jeder nachgeordnete Arbeitstisch mit einer Arbeitsbrücke ausgerüstet ist und auf einer seiner Längsseiten sich parallel zur Transportrichtung der VSG-Tafel erstreckende, auf Abstand voneinander angeordnete Anschlagelemente für eine Längskante einer VSG-Tafel und sich senkrecht zur Transportrichtung erstreckende, ebenfalls auf Abstand voneinander angeordnete Anschlagelemente für eine Stirnkante einer VSG-Tafel aufweist. Dabei ist vorteilhaft, wenn das Folienschneidwerkzeug an einer Arbeitsbrücke direkt verfahrbar oder mit einem verfahrbaren Werkzeugträgerschlitten, der das Folienschneidwerkzeug trägt, verfahrbar ist.

Des Weiteren ist zweckmäßig, zwei Folienschneidwerkzeuge in der Schneidanlage integriert anzuordnen, wobei die Schneidanlage mindestens eine Arbeitsbrücke mit mindestens einem daran verfahrbaren Arbeitswerkzeugschlitten aufweisen sollte. Dabei ist ebenfalls zweckmäßig, dass ein Folienschneidwerkzeug am - in Transportrichtung der VSG-Tafel betrachtet - vorderen Ende des Zuführtisches jeweils im Bereich einer Längskante des Tisches derart installiert ist, dass eine Längskante einer VSG-Tafel bearbeitet werden kann, während die VSG-Tafel vom Zuführtisch zum nachfolgenden Arbeitstisch transportiert wird und wobei das andere Folienschneidwerkzeug, z. B. ebenfalls im Bereich des vorderen Endes des Zuführtisches an einer Linearführungseinrichtung verfahrbar in Verfahrrichtung der Linearführungseinrichtung und zurück oder an einem an einer Arbeitsbrücke verfahrbaren Arbeitswerkzeug der Schneidanlage sitzt, wobei sich die Linearführungseinrichtung parallel zur Vorderkante des Zuführtisches erstreckt, außerhalb des Transportraumweges der VSG-Tafel angeordnet ist, und an der das Folienschneidwerkzeug mit entsprechenden Antriebsmitteln linear verfahrbar sitzt, so dass der Folienüberstand an der Stirnkante einer ruhenden VSG-Tafel bearbeitbar ist.

Zweckmäßigerweise ist das Folienschneidwerkzeug derart automatisch versetzbar an einer Linearführungseinrichtung angeordnet, dass es aus der Transportraumbahn einer VSG-Tafel verschoben und/oder verschwenkt werden kann.

Das Montageplattenelement ist vorzugsweise senkrecht zur Tischebene des Zuführtisches angeordnet, so dass die Schneide des Schneidmessers und die Mantellinie der Rolle senkrecht zu den zu bearbeitenden Glaskanten einer VSG-Tafel ausgerichtet sind.

Es liegt im Rahmen der Erfindung, die Linearführungseinrichtung für eine erfindungsgemäße Vorrichtung an einer der Arbeitsbrücken eines Arbeitstisches anzuordnen.

Die Erfindung sieht vor, dass am Tragelement tandemartig in Arbeitsrichtung der erfindungsgemäßen Vorrichtung hintereinander hinter der ersten Kombination aus Schneidmesser und Rolle eine weitere Kombination aus Schneidmesser und Rolle angeordnet ist. Dabei ist vorteilhaft, wenn das zweite Schneidmesser der weiteren Kombination an einer entsprechend funktionsgleich aufgebauten Messerträgereinrichtung wie die erste Kombination angeordnet ist. Zweckmäßig ist auch, wenn die zweite Rolle der weiteren Kombination an einer entsprechend funktionsgleich aufgebauten Rollenträgereinrichtung der ersten Kombination angeordnet ist.

Nach der Erfindung fluchten im Betrieb der erfindungsgemäßen Tandem-Vorrichtung vorzugsweise die oben genannten Mantellinien der ersten und zweiten Rolle der beiden Kombinationen in Arbeitsrichtung des Folienschneidwerkzeugs hintereinander. Dabei ist vorteilhaft, wenn auch die Schneiden des ersten und zweiten Schneidmessers der Kombinationen in Arbeitsstellung in Arbeitsrichtung hintereinander fluchten.

Anhand der Zeichnung wird die Erfindung im Folgenden beispielhaft näher erläutert. Es zeigen:
- Fig. 1: Keine Ausführungsform der Erfindung, sondern perspektivisch eine Ausführungsform eines Folienschneidwerkzeugs mit nur einer Kombination aus Schneidmesser und Rolle, angeordnet an einer in eine VSG-Schneidanlage integrierte Linearführung;
- Fig. 2: schematisch eine Draufsicht auf eine VSG-Schneidanlage mit der Andeutung der Positionierung von zwei erfindungsgemäßen Folienschneidschneidwerkzeugen.
- Fig. 3: eine Unteransicht auf eine Ausführungsform eines erfindungsgemäßen Folienschneidwerkzeugs.

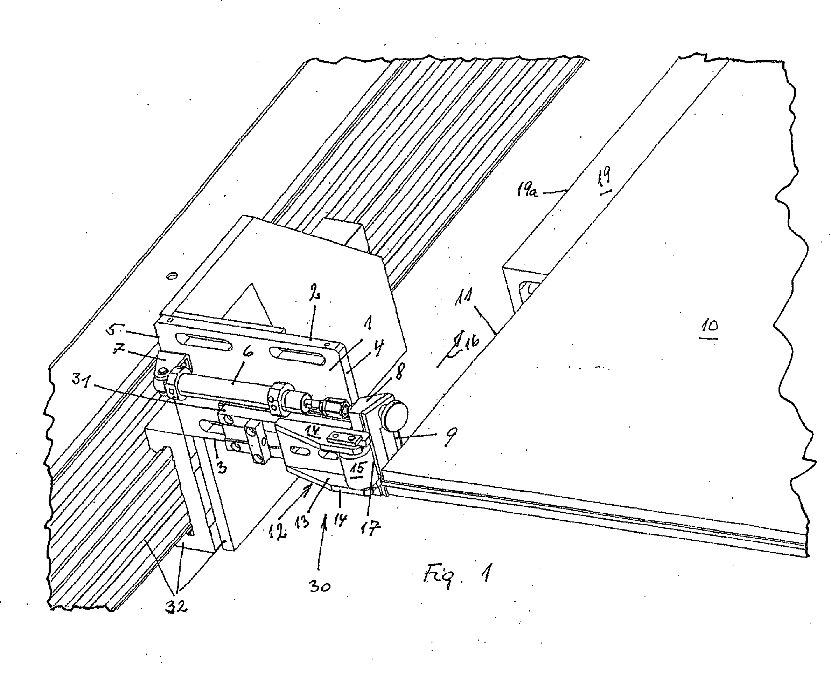

Ein Folienschneidwerkzeug 30 mit nur einer Kombination aus Schneidmesser und Rolle (Fig. 1 ) weist als Tragelement zweckmäßigerweise eine z. B. rechteckige Montageplatte 1 z. B. aus Metall auf, auf deren einen Oberfläche die Folienschneidwerkzeugelemente angeordnet sind. Die Montageplatte 1 hat zwei Längskanten 2, 3, eine vordere Stirnkante 4 und eine rückwärtige Kante 5. Parallel zu den Längskanten 2, 3 sich erstreckend ist im Bereich zwischen der Quermitte und einer Längskante 3 der Montageplatte 1 auf deren Oberfläche eine Tragplatte 31 parallel zu den Längskanten 2, 3 mit Linear-Führungselementen (nicht genau dargestellt) zwischen der Montageplatte 1 und der Tragplatte 31 parallel zueinander in Richtung einer zu bearbeitenden Glaskante 11 einer VSG-Tafel 10 verschieblich gehaltert, an deren vorderen Ende ein Messerträger- bzw. Messerhalterblock 8 befestigt ist, der die vordere Stirnkante 4 der Montageplatte 1 überragt und vorderendig ein erstes Folienschneidemesser 9, vorzugsweise lösbar befestigt, trägt, dessen Schneide parallel zur Stirnkante 4 bzw. senkrecht zu der zu bearbeitenden Glaskante 11 einer VSG-Tafel 10 verläuft.

Der Messerträgerblock 8 steht zudem mit einer Rollenträgereinrichtung 12 in fester Verbindung, die einen Tragarm 13 aufweist, der sich parallel zur Tragplatte 31 erstreckt und mit der Tragplatte 31 zusammen verschiebbar ist.

Vorderendseitig trägt der Tragarm 13 z. B. zwischen zwei sich nach vorne erstreckenden Gabelarmen 14 drehbar eine ein Berühren der Glaskante 11 durch die Schneide des ersten Schneidmessers 9 verhindernde erste Abstandhalterolle 15, deren Drehachse sich parallel zur Messerschneide des ersten Messers 9 erstreckt und in Arbeitsrichtung 16 des Folienschneidwerkzeugs 30 mit relativ kurzem Abstand von z. B. 3 bis 10 cm direkt hinter dem ersten Messer 9 angeordnet ist. Zweckmäßigerweise ist die Abstandhalterollenträgereinrichtung 12 oder die Welle bzw. Drehachse der ersten Abstandhalterolle 15 bezüglich der Glaskante 11 vor und zurück verstellbar bzw. versetzbar und damit auch justierbar z. B. zwischen den Gabelarmen 14 angeordnet.

Erfindungsgemäß ist die erste Abstandhalterolle 15 derart einstellbar angeordnet, dass ihre glaskantenseitige vordere Mantellinie 17 weiter nach vorne ragt als die Schneide des ersten Folienschneidemessers 9, und zwar derart, dass im Betrieb des Folienschneidwerkzeugs 30 die erste Rolle 15 auf der zu bearbeitenden VSG-Tafelkante 11 abrollen kann und dabei die Schneide des ersten Folienschneidemessers 9 einen durch die Positionierung des ersten Messers 9 relativ zur ersten Rolle 15 einen vorbestimmten Abstand von der VSG-Tafelkante 11 einhält und ohne Glaskantenberührung schneidet.

Ebenfalls parallel zu den Längskanten 2, 3 sich erstreckend ist im Bereich der Quermitte der Montageplatte 1 neben bzw. oberhalb der Tragplatte 31 auf der Montageplatte 1 eine vorzugsweise pneumatisch betriebene Kolbenzylinderanordnung 6 angeordnet, deren rückwärtiges Ende an einem Lagerbock 7 befestigt ist. Am Kopfende bzw. vorderen Ende der Kolbenzylinderanordnung 6, das die Stirnkante 4 nach vorne überragt, ist der Messerträgerblock 8 befestigt. Wird die Kolbenzylinderanordnung 6 betätigt, kann der Messerträgerblock 8 zusammen mit der Trägerplatte 31 und der Rollenträgereinrichtung 12 parallel zur Montageplatte 1 vor und zurück verschoben und mit pneumatischem Druck die erste Rolle 15 gegen die Glaskante 11, 11 a gepresst werden.

Mit diesen Mitteln kann somit ein unregelmäßiger Folienüberstand 32 auf eine vorbestimmte Breite von z. B. unter 0,2 mm, vorzugsweise 0,1 bis 0,5, insbesondere von 0,3 bis 0,4 mm geschnitten werden, ohne dass die Glaskante einer VSG-Tafel beeinträchtigt wird, wobei eine gleichmäßige Breite eingehalten werden kann. Vorzugsweise besteht zumindest die Mantelfläche der ersten Rolle 15 aus einem Kunststoff, der die Glaskante im Betrieb nicht beschädigen kann, gleichwohl aber das Oberflächenmantelmaterial so eingestellt ist, dass bei einem vorbestimmten Anpressdruck der ersten Rolle 15 gegen eine zu bearbeitende Glaskante 11 der vorbestimmte Abstand der Schneide des ersten Messers 9 von der Glaskante 11 gewährleistbar ist. Der verbleibende Überstand der Folie von unter 0,2 mm, z. B. 0,1 bis 0,5 mm ist dabei so flexibel und elastisch, dass er von der ersten Rolle beim Überrollen verdrängt und/oder an der Mantelfläche der Rolle Kunststoffmaterial verdrängen bzw. eindrücken kann, wobei aber jeweils die erste Rolle auf der Glaskante abrollt und somit den genauen Abstand der ersten Schneide von der Glaskante gewährleistet.

Sofern der Überstand relativ steif ist, kann es ausreichen, wenn die erste Rolle auf dem Rest-Überstand abrollt, der eine gleichbleibende Breite hat.

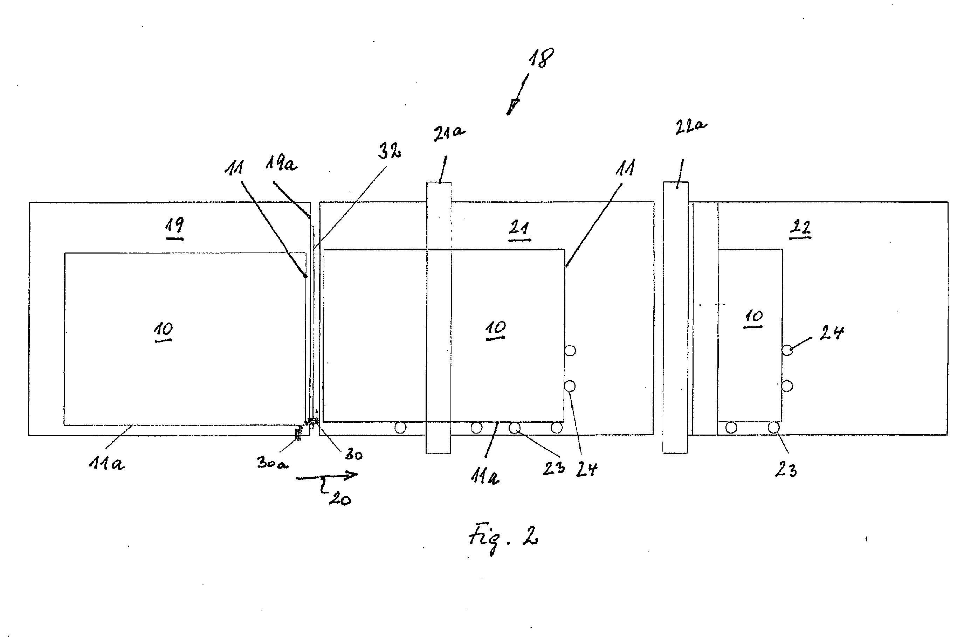

Nach der Erfindung ist zumindest ein erfindungsgemäßes Folienschneidwerkzeug 30 in eine VSG-Schneidanlage 18 integriert (Fig. 2). Eine solche Schneidanlage weist als Arbeitstische in der Regel einen Zuführtisch 19 auf, dem in Transportrichtung 20 der VSG-Tafel 10 ein Abschleiftisch 21 und diesem wiederum ein Schneidtisch 22 nachgeordnet ist. Sofern mit der Schneidanlage nur unbeschichtete VSG-Tafeln 10 bearbeitet werden sollen, ist kein Abschleiftisch 21 vorhanden. Der Abschleiftisch 21 und der Schneidtisch 22 weisen Arbeitsbrücken 21 a, 22a mit daran verfahrbaren Arbeitswerkzeugen (nicht dargestellt) und auf einer ihrer Längsseiten sich parallel zur Transportrichtung 20 erstreckende, auf Abstand voneinander angeordnete Anschlagelemente 23 für eine Längskante 11a einer VSG-Tafel 10 sowie sich senkrecht zur Transportrichtung 20 erstreckende, ebenfalls auf Abstand voneinander angeordnete, versenk- oder verschwenkbare Anschlagelemente 24 für eine Stirnkante 11 einer VSG-Tafel 10 auf. Die Arbeitsweise solcher Schneidanlagen ist bekannt und wird deshalb nicht weiter beschrieben.

Zweckmäßigerweise sind in einer Schneidanlage 18 zwei Folienschneidwerkzeuge 30, 30a integriert vorgesehen, und zwar vorzugsweise ein Folienschneidwerkzeug 30a am - in Transportrichtung 20 betrachtet - vorderen Ende des Zuführtisches 19 jeweils im Bereich einer Längskante des Tisches 19 fest derart installiert, dass eine Längskante 11 a einer VSG-Tafel 10 bearbeitet werden kann, während die VSG-Tafel 10 vom Zuführtisch 19 zum nachfolgenden Arbeitstisch 21 bzw. 22 transportiert wird. Das andere Folienschneidwerkzeug 30 ist lineargeführt und sitzt z. B. ebenfalls am vorderen Ende des Zuführtisches 19 an einer Linearführung 32 verfahrbar in Verfahrrichtung 16 und zurück, die sich parallel zur Vorderkante 19a des Zuführtisches 19 erstreckt, außerhalb des Transportraumweges der VSG-Tafel 10 angeordnet ist und an der das Folienschneidwerkzeug 30 mit entsprechenden Antriebsmitteln (nicht dargestellt) linear verfahrbar angeordnet ist, so dass die Stirnkante 11 einer ruhenden VSG-Tafel 10 bearbeitbar ist. Zudem ist dieses Folienschneidwerkzeug 30 derart automatisch versetzbar an der Linearführungseinrichtung 32 angeordnet, dass es aus der Transportraumbahn einer VSG-Tafel 10 verschoben und/oder verschwenkt werden kann, so dass der Weitertransport der VSG-Tafel 10 auf den folgenden bzw. nachgeordneten Arbeitstisch 21 oder 22 nicht gestört wird. Es liegt im Rahmen der Erfindung, auch das Folienschneidwerkzeug 30a aus der Transportraumbahn versetzbar und/oder verschwenkbar anzuordnen.

In beiden Fällen der Anordnung der Folienschneidwerkzeuge 30a, 30 ist die Montageplatte 1 senkrecht zur Tischebene des Zuführtisches 19 angeordnet, so dass die Schneide des ersten Schneidmessers 9 und die Mantellinie 17 der ersten Rolle 15 senkrecht zu den zu bearbeitenden Glaskanten 11, 11a einer VSG-Tafel 10 ausgerichtet sind.

Es liegt im Rahmen der Erfindung, die Linearführung 32 an der Arbeitsbrücke 21 a oder, wenn kein Abschleiftisch 21 vorgesehen ist, an der Arbeitsbrücke 22a des Schneidtisches anzuordnen oder das Folienwerkzeug 30 an einem an einer Arbeitsbrücke 21 a, 22a verfahrbaren ohnehin vorhandenen Arbeitswerkzeug anzuordnen.

Es liegt außerdem im Rahmen der Erfindung, das erfindungsgemäße Folienschneidwerkzeug 30, 30a vorzugsweise samt Linearführung 32 als Nachrüstelemente auszubilden für bereits vorhandene VSG-Schneidanlagen.

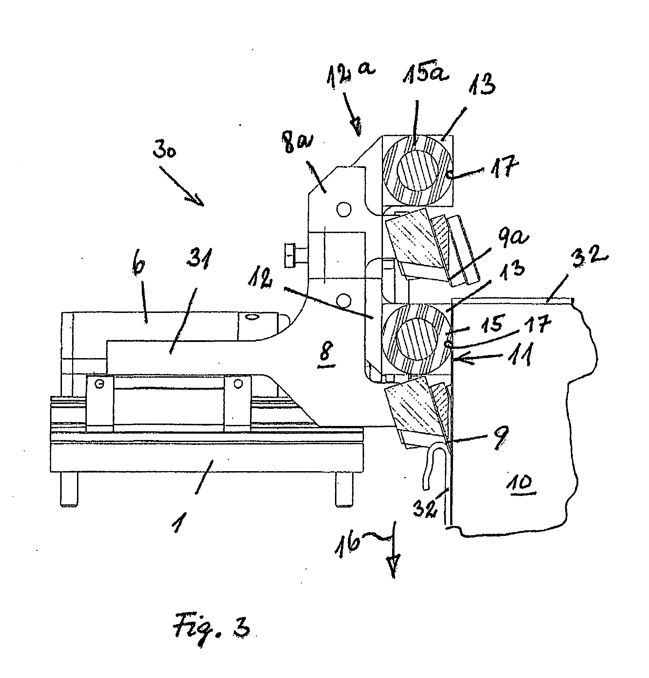

Die Erfindung sieht vor, am Tragelement 31, z. B. der Tragplatte 31, tandemartig in Arbeitsrichtung 16 hintereinander hinter der ersten Kombination aus erstem Schneidmesser 9 und erster Rolle 15 eine weitere Kombination aus einem zweiten Schneidmesser 9a und einer zweiten Rolle 15a anzuordnen, und zwar vorzugsweise jeweils an einer entsprechend funktionsgleich aufgebauten Messerträgereinrichtung 8a und einer entsprechend funktionsgleich aufgebauten Rollenträgereinrichtung 12a (Fig. 3).

Mit dieser Ausgestaltung kann gewährleistet werden, dass auch der Überstand 32 an VSG-Tafelecken beschnitten werden kann. Dabei fährt diese Vorrichtung mit der vorderen Kombination des ersten Schneidmessers 9 und der ersten Rolle 15 derart gegen die Kante 11 im Eckbereich der Tafel 10, dass die Kombination aus zweitem Schneidmesser 9a und zweiter Rolle 15a noch außerhalb der Ecke vor der Tafel 10 positioniert ist (Fig. 3). Die Mantellinie der Rollen 15, 15a und vorzugsweise auch die Schneiden der Schneidmesser 9, 9a fluchten jeweils in Arbeitsrichtung 16 hintereinander, so dass die zweite Rolle 15a den identischen Abstand zur Glaskante gewährleisten kann wie die erste Rolle 15. Zudem gewährleistet das zweite Schneidmesser 9a den gleichen Restüberstand der Folie. Im Betrieb beginnt das erste Schneidmesser 9 im Abstand von der Ecke der Glastafel 10 den Überstand 32 zu beschneiden bzw. zu entfernen, wobei ein Überstand 32 der Folie im Eckbereich stehen bleibt (nicht dargestellt), der vom nachfolgenden zweiten Schneidmesser 9a beschnitten wird.

Nach einer Ausführungsform der Erfindung (nicht dargestellt) kann die erfindungsgemäße Vorrichtung zum Entfernen von Folienüberstand in eine Schneidanlage 18 integriert werden, die mehrere parallele Schneidlinien aufweist, wobei nur ein Zuführtisch 19 quer zur Transportrichtung 20 verfahrbar vorgesehen ist und somit nur ein Zuführtisch 19 für mehrere Schneidlinien zuständig ist, die dann jeweils lediglich einen Abschleiftisch 21 und/oder einen Schneidtisch 22 aufweisen. Bei dieser Ausführungsform einer Schneidanlage ist lediglich an einer Ecke im Einlaufbereich eines Abschleiftisches 21 oder, sofern kein Abschleiftisch 21 vorhanden ist, im Einlaufbereich an der Ecke eines Schneidtisches 22 eine erfindungsgemäße Abschälvorrichtung derart angeordnet, dass der Überstand der vorderen Stirnkante einer Glastafel beim Querverfahren des Zuführtisches 19 bezüglich der Schneidlinie beschnitten wird. Für das Beschneiden der Längskante der Glastafel befindet sich im bezüglich der Transportrichtung 20 vorderen Eckbereich des Zuführtisches eine weitere erfindungsgemäße Abschälvorrichtung bzw. Vorrichtung zum Beschneiden von Folienüberstand derart, dass beim Einschieben einer Glastafel vom Zuführtisch auf eine der Schneidlinien der Überstand einer Längskante der Glastafel beschnitten wird. Diese Ausführungsform der Erfindung sieht somit lediglich eine Abschälvorrichtung für die Stirnkante an einer der Schneidlinien von mehreren Schneidlinien vor, wobei die andere Abschälvorrichtung am quer verfahrbaren Zuführtisch 19 derart angeordnet ist, dass beim Längstransport einer Glastafel auf eine Schneidlinie eine Längskante der Glastafel beschnitten werden kann.

## Patentansprüche

1. Vorrichtung zum Entfernen von Folienüberstand (32) an einer Glaskante (11, 11a) einer VSG-Tafel (10), zweckmäßigerweise ausgebildet als ein in eine VSG-Schneidanlage (18) integriertes oder integrierbares Folienschneidwerkzeug (30, 30a) und aufweisend ein vorzugsweise plattenförmiges Montageelement (1), an dem eine erste Kombination aus einem ersten Folienschneidmesser (9) mit arbeitsseitig vorstehender, sich senkrecht zur zu bearbeitenden Glaskante (11, 11a) einer VSG-Tafel (10) erstreckender Schneide angeordnet ist, und aus in einer parallel zur Glaskante (11, 11a) verlaufenden Arbeitsrichtung (16) des Folienschneidwerkzeugs (30, 30a) hinter der Schneide des ersten Folienschneidmessers (9) nachgeordneten ersten Abstandhalterolle (15) angeordnet ist, wobei die Drehachse der ersten Abstandhalterolle (15) parallel zur Schneidenerstreckung des ersten Folienschneidmessers (9) ausgerichtet ist und die zur VSG-Tafel (10) weisende, glaskantenseitige Mantellinie (17) der ersten Abstandhalterolle (15) weiter in Richtung Glaskante (11, 11a) der VSG-Tafel (10) vorsteht als die Schneide des ersten Folienschneidmessers (9) und wobei tandemartig in Arbeitsrichtung (16) hintereinander hinter der ersten Kombination aus erstem Folienschneidmesser (9) und erster Abstandhalterolle (15) eine weitere Kombination aus einem zweiten Folienschneidmesser (9a) und einer zweiten Abstandhalterolle (15a) angeordnet ist.

2. Vorrichtung nach Anspruch 1,
**dadurch gekennzeichnet,**
**dass** die Abstandhalterolle (15, 15a) aus Kunststoff bestehen oder zumindest oberflächlich Kunststoff aufweisen.

3. Vorrichtung nach Anspruch 1 oder 2,
**dadurch gekennzeichnet,**
**dass** die Folienschneidmesser (9) derart versetzbar angeordnet sind, dass ihr Schneidenvorstand bezüglich der Mantellinie (17) der Rollen (15, 15a) veränderbar ist.

4. Vorrichtung nach einem der Ansprüche 1 bis 3,
**dadurch gekennzeichnet,**
**dass** die Abstandhalterolle (15, 15a) derart versetzbar angeordnet sind, dass der Vorstand ihrer Mantellinie (17) relativ zum Schneidenvorstand der Schneidmesser (9, 9a) veränderbar ist.

5. Vorrichtung nach einem der Ansprüche 1 bis 4,
**dadurch gekennzeichnet,**
**dass** die Folienschneidmesser (9, 9a) und die Abstandhalterollen (15, 15a) einheitlich zusammen vor und zurück in Richtung Glaskante (11, 11a) verschiebbar am Montageelement (1) angeordnet sind, vorzugsweise verschiebbar mit einer steuerbaren, sich einendig am Montageelement (1) abstützenden Kolbenzylinderanordnung (6), die anderendig an der kombinierten Einrichtung aus Folienschneidmessereinrichtung und Abstandhalterolleneinrichtung, von denen mindestens eine Einrichtung am Montageelement (1) verschieblich sitzt, angreift.

6. Vorrichtung nach Anspruch 5,
**dadurch gekennzeichnet,**
**dass** das Montageelement (1) ein Montageplattenelement mit zwei Längskanten (2, 3), einer vorderen Stirnkante (4) und einer Hinterkante (5) ist, auf deren einen Montageoberfläche die Folienschneidwerkzeugeinrichtung und die Abstandhalterolleneinrichtung angeordnet sind.

7. Vorrichtung nach Anspruch 6,
**dadurch gekennzeichnet,**
**dass** auf der Montageoberfläche des Montageplattenelements (1) als Folienschneidmessereinrichtung ein Tragelement, z. B. in Form einer Tragplatte (31) parallel zu den Längskanten (2, 3) mit Führungselementen zwischen dem Montageplattenelement (1) und der Tragplatte (31) parallel zueinander verschieblich gehaltert ist, an deren vorderen Ende ein Messerträgerblock (8, 8a) befestigt ist, der die vordere Stirnkante (4) des Montageplattenelementes (1) überragt und vorderendig die Folienschneidmesser (9, 9a) vorzugsweise lösbar befestigt trägt, deren Schneiden parallel zur Stirnkante (4) bzw. senkrecht zu einer zu bearbeitenden Glaskante (11) einer VSG-Tafel (10) verläuft.

8. Vorrichtung nach Anspruch 7,
**dadurch gekennzeichnet,**
**dass** der Messerträgerblock (8, 8a) und/oder die Tragplatte (31) mit der Abstandhalterolleneinrichtung in fester Verbindung stehen, zweckmäßigerweise mit einer Rollenträgereinrichtung (12, 12a), die jeweils einen Tragarm (13) aufweist, der sich parallel zur Tragplatte (31) erstreckt und mit der Tragplatte (31) zusammen verschiebbar angeordnet ist und der vorderendseitig, z. B. zwischen zwei sich nach vorne erstreckenden Gabelarmen (14), drehbar die Abstandhalterolle (15, 15a) trägt, deren Drehachsen sich parallel zur Messerschneide der Messer (9, 9a) erstrecken und in Arbeitsrichtung des Folienschneidwerkzeugs (30, 30a) jeweils mit relativ kurzem Abstand von z. B. 3 bis 10 cm direkt hinter dem jeweiligen Messer (9, 9a) angeordnet ist.

9. Vorrichtung nach Anspruch 8,
**dadurch gekennzeichnet,**
**dass** die Abstandhalterollen (15, 15a) vor und zurück verstellbar in Richtung Glaskante (11, 11 a) und damit auch justierbar z. B. zwischen den Gabelarmen (14) angeordnet sind.

10. Vorrichtung nach einem der Ansprüche 6 bis 9,
**dadurch gekennzeichnet,**
**dass** parallel zu den Längskanten (2, 3) sich erstreckend neben der Tragplatte (31) auf dem Montageplattenelement (1) die Kolbenzylinderanordnung (6) angeordnet ist, deren rückwärtiges Ende an einem auf dem Montageelement (1) festsitzenden Lagerbock (7) befestigt ist, wobei am vorderen Ende der Kolbenzylinderanordnung (6) der Messerträgerblock (8, 8a) und/oder die Tragplatte (31) befestigt ist.

11. Vorrichtung nach einem der Ansprüche 1 bis 10,
**dadurch gekennzeichnet,**
**dass** sie in eine VSG-Schneidanlage (18) integriert ist, die einen Zuführtisch (19) und zumindest einen Arbeitstisch (21, 22) in Transportrichtung (20) der VSG-Tafel (10) nachgeordnet aufweist, wobei jeder nachgeordnete Arbeitstisch (21, 22) mit einer Arbeitsbrücke (21 a, 22a) ausgerüstet ist und auf einer seiner Längsseiten sich parallel zur Transportrichtung (20) erstreckende, auf Abstand voneinander angeordnete Anschlagelemente (23) für eine Längskante (11a) einer VSG-Tafel (10) und sich senkrecht zur Transportrichtung (20) erstreckende, ebenfalls auf Abstand voneinander angeordnete Anschlagelemente (24) für eine Stirnkante (11) einer VSG-Tafel (10) aufweist, wobei das Folienschneidwerkzeug an einer Arbeitsbrücke (21 a oder 22a) direkt verfahrbar oder über einen verfahrbaren Werkzeugträgerschlitten, der das Folienschneid.werkzeug trägt, verfahrbar ist.

12. Vorrichtung nach Anspruch 11,
**dadurch gekennzeichnet,**
**dass** zwei Folienschneidwerkzeuge (30, 30a) in der mindestens eine Arbeitsbrücke (21 a, 22a) mit daran verfahrbaren Arbeitswerkzeugschlitten aufweisenden Schneidanlage (18) integriert angeordnet sind, wobei ein Folienschneidwerkzeug (30a) am - in Transportrichtung (20) betrachtet - vorderen Ende des Zuführtisches (19) jeweils im Bereich einer Längskante des Tisches (19) derart installiert ist, dass eine Längskante (11a) einer VSG-Tafel (10) bearbeitet werden kann, während die VSG-Tafel (10) vom Zuführtisch (19) zum nachfolgenden Arbeitstisch (21 bzw. 22) transportiert wird, und wobei das andere Folienschneidwerkzeug (30), z. B. ebenfalls im Bereich des vorderen Endes des Zuführtisches (19), an einer Linearführungseinrichtung (32) verfahrbar in Verfahrrichtung (16) und zurück oder an einem verfahrbaren Arbeitswerkzeug der Schneidanlage (18) sitzt, wobei sich die Linearführungseinrichtung (32) parallel zur Vorderkante (19a) des Zuführtisches (19) erstreckt, außerhalb des Transportraumweges der VSG-Tafel (10) angeordnet ist und an der das Folienschneidwerkzeug (30) mit entsprechenden Antriebsmitteln linear verfahrbar sitzt, so dass die Stirnkante (11) einer ruhenden VSG-Tafel (10) bearbeitbar ist.

13. vorrichtung nach Anspruch 12,
**dadurch gekennzeichnet,**
**dass** das Folienschneidwerkzeug (30) derart automatisch versetzbar an der Linearführungseinrichtung (32) angeordnet ist, dass es aus der Transportraumbahn einer VSG-Tafel (10) verschoben und/oder verschwenkt werden kann.

14. Vorrichtung nach einem der Ansprüche 12 oder 13,
**dadurch gekennzeichnet,**
**dass** das Montageplattenelement (1) senkrecht zur Tischebene des Zuführtisches (19) angeordnet ist, so dass die Schneiden der Schneidmesser (9, 9a) und die Mantellinien (17) der Rollen (15, 15a) senkrecht zu den zu bearbeitenden Glaskanten (11, 11a) einer VSG-Tafel (10) ausgerichtet sind.

15. Vorrichtung nach einem der Ansprüche 12 bis 14,
**dadurch gekennzeichnet,**
**dass** die Linearführungseinrichtung (32) an einer der Arbeitsbrücken (21 a, 22a) der Arbeitstische (21, 22) angeordnet ist.

16. Vorrichtung nach einem der Ansprüche 1 bis 15,
**dadurch gekennzeichnet,**
**dass** die weitere Kombination aus Schneidmessereinrichtung mit Schneidmesser (9a) und Rolleneinrichtung mit Rolle (15a) ebenso wie die erste Kombination am Tragelement (31) angeordnet ist.

17. Vorrichtung nach Anspruch 16,
**dadurch gekennzeichnet,**
**dass** das Schneidmesser (9a) an einer der Messerträgereinrichtung (8) entsprechenden funktionsgleich aufgebauten Messerträgereinrichtung (8a) angeordnet ist.

18. Vorrichtung nach Anspruch 16 oder 17,
**dadurch gekennzeichnet,**
**dass** die Rolle (15a) an einer der Rollenträgereinrichtung (12) entsprechenden funktionsgleich aufgebauten Rollenträgereinrichtung (12a) angeordnet ist.

19. Vorrichtung nach einem der Ansprüche 16 bis 18,
**dadurch gekennzeichnet,**
**dass** im Betrieb der Vorrichtung die Mantellinien (17, 17a) der Rollen (15, 15a) in Arbeitsrichtung (16) hintereinander fluchten.

20. Vorrichtung nach einem der Ansprüche 16 bis 19,
**dadurch gekennzeichnet,**
**dass** die Schneiden der Schneidmesser (9, 9a) in Arbeitsstellung in Arbeitsrichtung (16) hintereinander fluchten.

21. Verfahren zum Entfernen von Folienüberstand an Glaskanten (11, 11a) einer
VSG-Tafel (10) in einer VSG-Schneidanlage (18) mit einer Vorrichtung nach einem der Ansprüche 1 bis 20,
**dadurch gekennzeichnet,**
**dass** zunächst bei einer auf einem Zuführtisch (19) der VSG-Schneidanlage (18) ruhenden VSG-Tafel (10) stirnseitig an der Glaskante (11) der Folienüberstand (32) mit einem an einer Linearführungseinrichtung oder einem Arbeitswerkzeug der Schneidanlage (18) angeordneten, automatisch angetriebenen Folienschneidwerkzeug (30) beschnitten wird, und anschließend mit einem am Zuführtisch (19) der VSG-Schneidanlage (18) oder am Anfang eines dem Zuführtisch (19) nachgeordneten Arbeitstisch (21, 22) fest installierten Folienschneidwerkzeug (30a) der Folienüberstand an der Längskante (11a) der VSG-Tafel (10) beschnitten wird, während die VSG-Tafel (10) zu einem Arbeitstisch (21, 22) transportiert wird oder es wird in umgekehrter Reihenfolge beschnitten.

22. Verfahren nach Anspruch 21,
**dadurch gekennzeichnet,**
**dass** derart geschnitten wird, dass ein Restüberstand unter 0,2 mm, vorzugsweise zwischen 0,1 und 0,5 mm, insbesondere zwischen 0,3 und 0,4 mm, verbleibt.

## Claims

1. Apparatus for removing film overhang (32) on a glass edge (11, 11a) of a laminated safety glass (LSG) sheet (10), configured expediently as a film cutting tool (30, 30a) which is integrated or can be integrated in an LSG cutting plant (18), and having a preferably plate-like mounting element (1), on which there is arranged a first combination of a first film cutting knife (9) with a cutting edge which protrudes on the working side and extends perpendicularly with respect to the glass edge (11, 11a) of an LSG sheet (10) to be machined and of a first spacing roller (15) which is arranged downstream behind the cutting edge of the first film cutting knife (9) in a working direction (16) of the film cutting tool (30, 30a) which runs parallel to the glass edge (11, 11a), wherein the axis of rotation of the first spacing roller (15) is oriented parallel to the extent of the cutting edge of the first film cutting knife (9), and the surface line (17) of the first spacing roller (15) situated on the glass edge side and facing towards the LSG sheet (10) protrudes further in the direction of the glass edge (11, 11a) of the LSG sheet (10) than the cutting edge of the first film cutting knife (9), and wherein a further combination of a second film cutting knife (9a) and a second spacing roller (15a) is arranged behind the first combination of the first film cutting knife (9) and the first spacing roller (15) in tandem fashion in succession in the working direction (16).

2. Apparatus according to Claim 1,
**characterized**
**in that** the spacing rollers (15, 15a) consist of plastic or at least have plastic on the surface.

3. Apparatus according to Claim 1 or 2, **characterized**
**in that** the film cutting knives (9) are arranged displaceably in such a manner that the protrusion of the cutting edge thereof with respect to the surface line (17) of the rollers (15, 15a) can be varied.

4. Apparatus according to one of Claims 1 to 3, **characterized**
**in that** the spacing rollers (15, 15a) are arranged displaceably in such a manner that the protrusion of the surface line (17) thereof in relation to the protrusion of the cutting edge of the cutting knives (9, 9a) can be varied.

5. Apparatus according to one of Claims 1 to 4, **characterized**
**in that** the film cutting knives (9, 9a) and the spacing rollers (15, 15a) are arranged on the mounting element (1) movably together as a unit backwards and forwards in the direction of the glass edge (11, 11a), preferably movably together with a controllable piston cylinder arrangement (6) which at one end is supported on the mounting element (1) and which at the other end engages with the combined device of the film cutting knife device and spacing roller device, at least one device of which is movably mounted on the mounting element (1).

6. Apparatus according to Claim 5,
**characterized**
**in that** the mounting element (1) is a mounting plate element with two longitudinal edges (2, 3), a front end edge (4) and a rear edge (5), on one mounting surface of which the film cutting tool device and the spacing roller device are arranged.

7. Apparatus according to Claim 6,
**characterized**
**in that** a support element, for example in the form of a support plate (31), is movably mounted on the mounting surface of the mounting plate element (1) as a film cutting knife device, parallel to the longitudinal edges (2, 3) with guiding elements between the mounting plate element (1) and the support plate (31) parallel to each other, said support plate having, fastened on the front end thereof, a knife support block (8, 8a) which projects beyond the front end edge (4) of the mounting plate element (1) and supports at the front end, in a preferably releasably fastened manner, the film cutting knives (9, 9a), the cutting edge of which extends parallel to the end edge (4) or perpendicularly with respect to a glass edge (11) of an LSG sheet (10) to be machined.

8. Apparatus according to Claim 7,
**characterized**
**in that** the knife support block (8, 8a) and/or the support plate (31) are firmly connected to the spacing roller device, expediently to a roller support device (12, 12a) each of which has a support arm (13) which extends parallel to the support plate (31) and is arranged movably together with the support plate (31) and which at the front end side, for example between two forwardly extending fork arms (14), rotatably supports the spacing roller (15, 15a), the axes of rotation of which extend parallel to the knife cutting edge of the knives (9, 9a), and each of which is arranged in the working direction of the film cutting tool (30, 30a) at a relatively small distance of, for example, 3 to 10 cm directly behind the respective knife (9, 9a).

9. Apparatus according to Claim 8,
**characterized**
**in that** the spacing rollers (15, 15a) are arranged movably forwards and backwards in the direction of the glass edge (11, 11a) and thus also adjustably, for example between the fork arms (14).

10. Apparatus according to one of Claims 6 to 9, **characterized**
**in that** the piston cylinder arrangement (6) is arranged parallel to the longitudinal edges (2, 3), extending next to the support plate (31) on the mounting plate element (1), and has the rear end thereof fastened on a bearing block (7) fixed on the mounting element (1), wherein the knife support block (8, 8a) and/or the support plate (31) are fastened on the front end of the piston cylinder arrangement (6).

11. Apparatus according to one of Claims 1 to 10, **characterized**
**in that** it is integrated in an LSG cutting plant (18) which has a feed table (19) and at least one work table (21, 22) arranged downstream in the direction of transportation (20) of the LSG sheet (10), wherein each downstream work table (21, 22) is equipped with a work bridge (21a, 22a) and, on one of the longitudinal sides thereof, has stop elements (23) for a longitudinal edge (11a) of an LSG sheet (10), which are arranged at a distance from each other and extend parallel to the direction of transportation (20), and stop elements (24) for an end edge (11) of an LSG sheet (10), which are also arranged at a distance from each other and extend perpendicularly with respect to the direction of transportation (20), wherein the film cutting tool is directly movable on a work bridge (21a or 22a) or is movable via a movable tool holder carriage which carries the film cutting tool.

12. Apparatus according to Claim 11, **characterized**
**in that** two film cutting tools (30, 30a) are arranged integrated in the cutting plant (18) which has at least one work bridge (21a, 22a) with work tool carriages movable thereon, wherein one film cutting tool (30a) is installed on the front end - viewed in the direction of transportation (20) - of the feed table (19) in each case in the region of a longitudinal edge of the table (19), in such a manner that a longitudinal edge (11a) of an LSG sheet (10) can be machined, while the LSG sheet (10) is transported from the feed table (19) to the following work table (21 or 22), and wherein the other film cutting tool (30) is mounted, for example also in the region of the front end of the feed table (19), on a linear guiding device (32) movably in the direction of travel (16) and backwards or on a movable work tool of the cutting plant (18), wherein the linear guiding device (32) extends parallel to the front edge (19a) of the feed table (19), is arranged outside of the transportation space path of the LSG sheet (10) and on which the film cutting tool (30) with corresponding drive means is mounted in a linearly movable manner, so that the end edge (11) of an LSG sheet (10) resting thereon can be machined.

13. Apparatus according to Claim 12,
**characterized**
**in that** the film cutting tool (30) is arranged so as to be automatically displaceable on the linear guiding device (32) in such a manner that it can be moved and/or pivoted out of the transportation space path of an LSG sheet (10).

14. Apparatus according to either of Claims 12 and 13, **characterized**
**in that** the mounting plate element (1) is arranged perpendicularly with respect to the table plane of the feed table (19), so that the cutting edges of the cutting knives (9, 9a) and the surface lines (17) of the rollers (15, 15a) are oriented perpendicularly with respect to the glass edges (11, 11a) of an LSG sheet (10) which are to be machined.

15. Apparatus according to one of Claims 12 to 14, **characterized**
**in that** the linear guiding device (32) is arranged on one of the work bridges (21a, 22a) of the work tables (21, 22).

16. Apparatus according to one of Claims 1 to 15, **characterized**
**in that** the further combination of the cutting knife device with the cutting knife (9a) and the roller device with the roller (15a) is arranged on the support element (31) just like the first combination.

17. Apparatus according to Claim 16,
**characterized**
**in that** the cutting knife (9a) is arranged on a knife support device (8a) designed correspondingly with the same function as the knife support device (8).

18. Apparatus according to Claim 16 or 17, **characterized**
**in that** the roller (15a) is arranged on a roller support device (12a) designed correspondingly with the same function as the roller support device (12).

19. Apparatus according to one of Claims 16 to 18, **characterized**
**in that**, during operation of the apparatus, the surface lines (17, 17a) of the rollers (15, 15a) are aligned behind one another in the working direction (16).

20. Apparatus according to one of Claims 16 to 19, **characterized**
**in that** the cutting edges of the cutting knives (9, 9a) in the working position are aligned behind one another in the working direction (16).

21. Method for removing film overhang on glass edges (11, 11a) of an LSG sheet (10) in an LSG cutting plant (18) using an apparatus according to one of Claims 1 to 20,
**characterized**
**in that** firstly, in the case of an LSG sheet (10) resting on a feed table (19) of the LSG cutting plant (18), the film overhang (32) on the front side of the glass edge (11) is cut using an automatically driven film cutting tool (30) arranged on a linear guiding device or a work tool of the cutting plant (18), and then, using a film cutting tool (30a) installed in a fixed manner on the feed table (19) of the LSG cutting plant (18), or at the start of a work table (21, 22) arranged downstream of the feed table (19), the film overhang on the longitudinal edge (11a) of the LSG sheet (10) is cut, while the LSG sheet (10) is transported towards a work table (21, 22), or cutting is performed in the reverse sequence.

22. Method according to Claim 21,
**characterized**
**in that** cutting is performed in such a manner that a remaining overhang of less than 0.2 mm, preferably between 0.1 and 0.5 mm, and in particular between 0.3 and 0.4 mm, remains.

## Revendications

1. Dispositif servant à supprimer un dépassement de feuille (32) au niveau d'un rebord en verre (11, 11a) d'un tableau de sécurité composite (10), réalisé de manière appropriée comme un outil à découper des feuilles (30, 30a) intégré ou pouvant être intégré dans une installation de découpage de tableau de sécurité composite (18) et présentant un élément de montage (1) de préférence en forme de panneau, au niveau duquel est disposée une première combinaison composée d'un premier couteau à découper des feuilles (9) doté d'une lame faisant saillie côté travail, s'étendant de manière perpendiculaire par rapport au rebord en verre (11, 11a) à usiner d'un tableau de sécurité composite (10) et d'un premier rouleau de maintien de distance (15) disposé en aval derrière la lame du premier couteau à découper des feuilles (9) dans une direction de travail (16) de l' outil à découper des feuilles (30, 30a) s'étendant de manière parallèle par rapport au rebord en verre (11, 11a), sachant que l'axe de rotation du premier rouleau de maintien de distance (15) est orienté de manière parallèle par rapport à l'extension de la lame du premier couteau à découper des feuilles (9) et que la génératrice (17) du premier rouleau de maintien de distance (15), dirigée vers le tableau de sécurité composite (10), située côté rebord en verre, fait en outre saillie du tableau de sécurité composite (10) en direction du rebord en verre (11, 11a) comme la lame du premier couteau à découper des feuilles (9) et sachant qu'une autre combinaison composée d'un deuxième couteau à découper des feuilles (9a) et d'un deuxième rouleau de maintien de distance (15a) est disposée à la manière d'un tandem dans la direction de travail (16) derrière la première combinaison composée du premier couteau à découper des feuilles (9) et du premier rouleau de maintien de distance (15).

2. Dispositif selon la revendication 1,
**caractérisé en ce que** les rouleaux de maintien de distance (15, 15a) sont constitués de plastique ou présentent au moins en surface du plastique.

3. Dispositif selon la revendication 1 ou 2,
**caractérisé en ce que** les couteaux à découper des feuilles (9) sont disposés de manière à pouvoir être décalés de telle manière que leur débord de coupe peut être modifié par rapport à la génératrice (17) des rouleaux (15, 15a).

4. Dispositif selon l'une quelconque des revendications 1 à 3, **caractérisé en ce que** les rouleaux de maintien de distance (15, 15a) sont disposés de manière à pouvoir être décalés de telle manière que le débord de leur génératrice (17) peut être modifié par rapport au débord de coupe des couteaux à découper (9, 9a).

5. Dispositif selon l'une quelconque des revendications 1 à 4, **caractérisé en ce que** les couteaux à découper des feuilles (9, 9a) et les rouleaux de maintien de distance (15, 15a) sont disposés sur l'élément de montage (1) de manière à pouvoir être déplacés ensemble de manière unitaire en avant et en arrière dans la direction du rebord en verre (11, 11a), de préférence de manière à pouvoir être déplacés avec un ensemble piston-cylindre (6) pouvant être commandé, s'appuyant à une extrémité au niveau de l'élément de montage (1), lequel ensemble piston-cylindre saisit à l'autre extrémité le système combiné composé du système de couteaux à découper des feuilles et du système de rouleaux de maintien de distance, dont au moins un système repose au niveau de l'élément de montage (1) de manière mobile.

6. Dispositif selon la revendication 5,
**caractérisé en ce que** l'élément de montage (1) est un élément formant panneau de montage doté de deux rebords longitudinaux (2, 3), d'un rebord frontal avant (4) et d'un rebord arrière (5), sur une surface de montage desquelles sont disposés le système d'outil à découper des feuilles et le système de rouleaux de maintien de distance.

7. Dispositif selon la revendication 6,
**caractérisé en ce que** sur la surface de montage de l'élément formant panneau de montage (1), en tant que système de couteau à découper des feuilles, un élément porteur, par exemple sous la forme d'un panneau porteur (31), est maintenu de manière parallèle par rapport aux rebords longitudinaux (2, 3) avec des éléments de guidage entre l'élément formant panneau de montage (1) et le panneau porteur (31) de manière mobile parallèlement par rapport à ces derniers, à l'extrémité avant duquel panneau porteur est fixé un bloc de support de couteau (8, 8a) qui dépasse du rebord frontal avant (4) de l'élément formant panneau de montage (1) et supporte de manière fixée, de préférence de manière détachable, à l'extrémité avant les couteaux à découper des feuilles (9, 9a), dont la lame respective s'étend de manière parallèle par rapport au rebord frontal (4) ou de manière perpendiculaire par rapport à un rebord en verre (11) à usiner d'un tableau de sécurité composite (10).

8. Dispositif selon la revendication 7,
**caractérisé en ce que** le bloc de support de couteau (8, 8a) et/ou le panneau porteur (31) sont reliés de manière fixe au système de rouleaux de maintien de distance, de manière appropriée à un système de support de rouleaux (12, 12a) qui présente respectivement un bras porteur (13) s'étendant de manière parallèle par rapport au panneau porteur (31) et disposé de manière à pouvoir être déplacé conjointement avec le panneau porteur (31) et supportant à l'extrémité avant le rouleau de maintien de distance (15, 15a) de manière à pouvoir tourner par exemple entre deux fourches (14) s'étendant vers l'avant, dont les axes de rotation s'étendent de manière parallèle par rapport à la lame des couteaux (9, 9a) et sont disposés dans la direction de travail de l'outil à découper des feuilles (30, 30a) respectivement à une distance relativement courte comprise par exemple entre 3 et 10 cm directement derrière le couteau concerné (9, 9a).

9. Dispositif selon la revendication 8,
**caractérisé en ce que** les rouleaux de maintien de distance (15, 15a) sont disposés de manière à pouvoir être déplacés en avant et en arrière dans la direction du rebord en verre (11, 11a) et ainsi de manière à pouvoir être également ajustés par exemple entre les fourches (14).

10. Dispositif selon l'une quelconque des revendications 6 à 9, **caractérisé en ce que** l'ensemble piston-cylindre (6) est disposé sur l'élément formant panneau de montage (1) s'étendant de manière parallèle par rapport aux rebords longitudinaux (2, 3), à côté du panneau porteur (31), l'extrémité arrière duquel ensemble piston-cylindre étant fixée au niveau d'un support de palier (7) reposant sur l'élément de montage (1), sachant que le bloc de support de couteau (8, 8a) et/ou le panneau porteur (31) sont fixés au niveau de l'extrémité avant de l'ensemble piston-cylindre (6).

11. Dispositif selon l'une quelconque des revendications 1 à 10, **caractérisé en ce que** ledit dispositif est intégré dans une installation de découpage de tableau de sécurité composite (18), qui présente en aval une table d'amenée (19) et au moins une table de travail (21, 22) dans la direction de transport (20) du tableau de sécurité composite (10), sachant que chaque table de travail (21, 22) disposée en aval est équipée d'un pont de travail (21a, 22a) et présente des éléments de butée (23) s'étendant de manière parallèle par rapport à la direction de transport (20), disposés à distance les uns des autres pour un rebord longitudinal (11a) d'un tableau de sécurité composite (10) et des éléments de butée (24) s'étendant de manière perpendiculaire par rapport à la direction de transport (20), disposés également à distance les uns des autres pour un rebord frontal (11) d'un tableau de sécurité composite (10), sachant que l'outil à découper des feuilles peut être déplacé directement au niveau d'un pont de travail (21a ou 22a) ou peut être déplacé par l'intermédiaire d'un chariot de support d'outils déplaçable, lequel supporte l'outil à découper des feuilles.

12. Dispositif selon la revendication 11,
**caractérisé en ce que** deux outils à découper des feuilles (30, 30a) sont disposés de manière intégrée dans l'installation de découpage (18) présentant au moins un pont de travail (21a, 22a) doté de chariots d'outils de travail déplaçable au niveau dudit pont de travail, sachant qu'un outil à découper des feuilles (30a) est installé au niveau -vu dans la direction de transport (20) - de l'extrémité avant de la table d'amenée (19) respectivement dans la zone d'un rebord longitudinal de la table (19) de telle manière qu'un rebord longitudinal (11a) d'un tableau de sécurité composite (10) peut être usiné, tandis que le tableau de sécurité composite (10) est transporté par la table d'amenée (19) en direction de la table de travail (21 ou 22) qui suit, et sachant que l'autre outil à découper des feuilles (30) peut être déplacé dans la direction de déplacement (16) et dans le sens du retour au niveau d'un système de guidage linéaire (32), par exemple également dans la zone de l'extrémité avant de la table d'amenée (19) ou repose au niveau d'un outil de travail déplaçable de l'installation de découpage (18), sachant que le système de guidage linéaire (32) s'étend de manière parallèle par rapport au rebord avant (19a) de la table d'amenée (19), est disposé à l'extérieur du trajet de l'espace de transport du tableau de sécurité composite (10) et sachant qu'au niveau dudit système de guidage linéaire repose l'outil à découper des feuilles (30) de manière à pouvoir être déplacé linéairement avec des moyens d'entraînement correspondants de sorte que le rebord frontal (11) d'un tableau de sécurité composite (10) à l'arrêt peut être usiné.

13. Dispositif selon la revendication 12,
**caractérisé en ce que** l'outil à découper des feuilles (30) est disposé de manière à pouvoir être décalé de manière automatique au niveau du système de guidage linéaire (32) de telle manière qu'il peut être coulissé et/ou pivoté depuis la bande d'espace de transport d'un tableau de sécurité composite (10).

14. Dispositif selon l'une quelconque des revendications 12 ou 13, **caractérisé en ce que** l'élément formant panneau de montage (1) est disposé de manière perpendiculaire par rapport au plan de table de la table d'amenée (19), de sorte que les lames des couteaux à découper (9, 9a) et les génératrices (17) des rouleaux (15, 15 a) sont orientées de manière perpendiculaire par rapport aux rebords en verre (11, 11a) à usiner d'un tableau de sécurité composite (10).

15. Dispositif selon l'une quelconque des revendications 12 à 14, **caractérisé en ce que** le système de guidage linéaire (32) est disposé au niveau d'un des ponts de travail (21a, 22a) des tables de travail (21, 22).

16. Dispositif selon l'une quelconque des revendications 1 à 15, **caractérisé en ce que** l'autre combinaison composée du système de couteau à découper doté du couteau à découper (9a) et du système de rouleaux doté du rouleau (15a) ainsi que la première combinaison sont disposées sur l'élément porteur (31).

17. Dispositif selon la revendication 16,
**caractérisé en ce que** le couteau à découper (9a) est disposé au niveau d'un système de support de couteau (8a) présentant une structure fonctionnellement identique de manière correspondante au système de support de couteau (8).

18. Dispositif selon la revendication 16 ou 17,
**caractérisé en ce que** le rouleau (15a) est disposé au niveau d'un système de support de rouleaux (12a) présentant une structure fonctionnellement identique de manière correspondante au système de support de rouleaux (12).

19. Dispositif selon l'une quelconque des revendications 16 à 18, **caractérisé en ce que** lors du fonctionnement du dispositif, les génératrices (17, 17a) des rouleaux (15, 15a) sont alignées les unes derrière les autres dans la direction de travail (16).

20. Dispositif selon l'une quelconque des revendications 16 à 19, **caractérisé en ce que** les lames des couteaux à découper (9, 9a) sont alignées dans la position de travail les unes derrière les autres dans la direction de travail (16).

21. Dispositif servant à supprimer le dépassement de feuille au niveau de rebords en verre (11, 11a) d'un tableau de sécurité composite (10) dans une installation de découpage de tableau de sécurité composite (18), doté d'un dispositif selon l'une quelconque des revendications 1 à 20,
**caractérisé en ce que** tout d'abord dans le cas d'un tableau de sécurité composite (10) à l'arrêt sur une table d'amenée (19) de l'installation de découpage de tableau de sécurité composite (18), le dépassement de feuille (32) est découpé côté frontal au niveau du rebord en verre (11), avec un outil à découper des feuilles (30) disposé au niveau d'un système de guidage linéaire ou d'un outil de travail de l'installation de découpage (18), entraîné de manière automatique, puis le dépassement de feuille est découpé au niveau du rebord longitudinal (11a) du tableau de sécurité composite (10) avec un outil à découper des feuilles (30a) installé de manière fixe au niveau de la table d'amenée (19) de l'installation de découpage de tableau de sécurité composite (18) ou au début d'une table de travail (21, 22) disposée en aval de la table d'amenée (19), tandis que le tableau de sécurité composite (10) est transporté en direction d'une table de travail (21, 22), ou il est découpé dans le sens inverse.

22. Procédé selon la revendication 21,
**caractérisé en ce qu'**on procède au découpage de telle manière qu'un dépassement restant inférieur à 0,2 mm, de préférence compris entre 0,1 et 0,5 mm, en particulier compris entre 0,3 et 0,4 mm, reste.
